# EUROPEAN PATENT SPECIFICATION

(11) **EP 2 779 714 B1**
(45) Date of publication and mention of the grant of the patent: **05.12.2018**
(21) Application number: 14171969.0
(22) Date of filing: 29.10.2009
(51) Int. Cl.: H04W 64/00

(54) **System and method for automatically counting the number of people in an area**
System und Verfahren zum automatischen Zählen der Anzahl der Menschen in einem Gebiet
Système et procédé pour compter automatiquement le nombre de personnes dans une zone

(30) Priority: 30.10.2008 ES 200803089
(43) Date of publication of application: 17.09.2014
(62) Divisional of application: 09174547.1
(73) Proprietor: Vodafone Group plc, Newbury, Berkshire RG14 2FN (GB); Vodafone España, S.A., 28108 Alcobendas (ES)
(72) Inventor: Almodovar Herraiz, Daniel, 28042 Madrid (ES); Martin Briega, Alberto, 28050 Madrid (ES)
(74) Representative: Boult Wade Tennant LLP

(56) References cited:
- EP-A2- 1 482 759
- WO-A2-98/15133
- "Digital cellular telecommunications system (Phase 2+); Universal Mobile Telecommunications System (UMTS); Location management procedures (3GPP TS 23.012 version 7.3.0 Release 7); ETSI TS 123 012", ETSI STANDARDS, LIS, SOPHIA ANTIPOLIS CEDEX, FRANCE, vol. 3-CN2;3-CN4, no. V7.3.0, 1 June 2007 (2007-06-01), XP014037696, ISSN: 0000-0001

## Description

### Field of the invention

The present invention lies in the field of mobile communications, and more specifically in providing a set of techniques to manage automatically and accurately counting the number of people in an area by using mobile communications means, using information provided by the mobile telephones carried by the subscribers.

### Background of the invention

In certain scenarios, knowing the number of people in a place (exact or estimated) can be very relevant. One example is train carriages, where the train authorities can use that number to better dimension the service. Other examples are street demonstrations, especially for protesting, where government, politicians and media discuss heavily, often providing very different numbers for a same event favourable to their position.

When the places are closed or controlled, i.e. access is restricted by tickets or through a few number of gates, people can be counted. However, in those scenarios with open places of uncontrolled access, such as the street or some trains, this is quite difficult. Even in controlled places of large size (e.g. underground network), there isn't an easy way to know the number of people in a certain small area once they passed through the entry gate.

Current solutions in those scenarios are not accurate and automatic at the same time. They can be accurate but requiring slow manual counting (e.g. train staff going carriage by carriage). They can be semi-automated but leading to non-guaranteed accuracy (e.g. helicopter taking photos of the street and then estimating a density of people per square meter to apply to the demonstration area).

Document US2003010822 discloses a method and system for electronic route planning and virtual queue handling, proposing a system for queues management in a theme park. Specially prepared handsets are issued to the users so that these handsets can be counted: the counting mechanism uses a short range wireless connection such as Bluetooth [RTM].

From document US2004158482 is known a method for managing the flow of persons in relation to centres of crowd concentration via wireless control. It is related to the control of crowds and queues at theme parks, where the mobile phone is used only as a tool to enter what attractions the user wants to visit.

Document US2002183069 discloses a method and system for mobile station positioning in cellular communication networks for detecting and counting mobile phones based on the existing base stations of the cellular networks, e.g. ITS (Intelligent Transportation Systems).

From document EP1779133-A1, it is known to monitor the movement of mobile communication devices by using a plurality of receiver units (probes), distributed in the coverage area, that detect all the current transmissions from a mobile device to a base station.

Document WO98/15133 discloses a method of controlling subscriber registrations in a mobile communication system. The method is configured to count the number of registered subscribers and to reject further registration of subscribers once a quota is exceeded.

It is well-known that abbreviations and acronyms are frequently used in the mobile telephony field. Below is a glossary of acronyms/terms used throughout the present specification:
- 3GPP: The 3rd Generation Partnership Project
- BSC: Base Station Controller
- BTS: Base Transceiver Station
- GSM: Global System for Mobile Communications
- IMSI: International Mobile Subscriber Identity
- IP: Internet Protocol
- ITS: Intelligent Transportation Systems
- MSC: Mobile Switching Centre
- LAC: Location Area Code
- RNC: Radio Network Controller
- SMS: Short Message Service
- TIMSI: Temporary International Mobile Subscriber Identity
- UMTS: Universal Mobile Telecommunications System

### Summary of the Invention

The invention relates to a method and system for automatically counting the number of people in an area according to claim 1 and claim 9, respectively. Preferred embodiments of the method are defined in the dependent claims. The embodiments and/or examples of the following description which are not covered by the appended claims are considered as not being part of the present invention.

In the present method for automatically counting people, said people are carrying a functioning mobile phone. A "functioning" mobile phone is a device that is "switched-on" and capable of connecting to at least one mobile telecommunications network over at least one radio access technology, typically in IDLE or ACTIVE mode.

In an illustrative example, useful for understanding the invention, the method comprises:
- broadcasting, in the licensed spectrum of at least one mobile network operator from at least one local unit, each one located at an area where people is to be counted, the coverage area, a LAC different from any other LAC of the radio cells of the mobile network in the surroundings;
   - establishing each local unit a Location Update dialogue with any mobile phone answering to the LAC broadcast, obtaining from each answering mobile phone its IMSI number;
   - sending each local unit a Location Updating Reject message to each mobile phone whose IMSI number has been obtained;
   - counting the different IMSI numbers received (discarding or not the duplicated IMSI numbers received during a predetermined period of time before);
   - calculating an estimated number of people in the coverage area using additional information, for instance stored in a database.

In an illustrative example, each local unit can broadcast the same LAC continuously, leading to a continuous mode, or according to an embodiment of the invention, each local unit can broadcast different LACs each time, leading to a pulse mode, where counting is done in pulses.

The coverage area of each local unit can preferably be configurable through at least one of the following parameters: the transmission power to modify the reach and/or the radiation pattern of the antenna system to modify the shape of the coverage area.

In a preferred embodiment, where there is a plurality of local units, the method comprises receiving at a processing unit the counting of the different IMSI numbers for each coverage area from the different local units, the calculation of the estimated number of people in each corresponding coverage area being carried out in said processing unit with access to the additional information.

The additional information can comprise at least one of the following information:
- the percentage of switched-on mobile phones versus people in the country, region, city or neighbourhood where the corresponding local unit is located;
- the market share of the selected mobile network operator in the country, region, city or neighbourhood where the corresponding local unit is located.

The present invention also comprises a system for automatically counting the number of people in an area, said people carrying a switched-on mobile phone. In an illustrative example, useful for understanding the invention, the system comprises:
- at least one local unit provided with cellular radio transceiver means for transmitting and receiving signals in the licensed spectrum of at least one mobile network operator, each local unit being located at an area where people is to be counted, the coverage area, and being configured for:
   - broadcasting a LAC different from any other LAC of the radio cells of the mobile network in the surroundings;
   - establishing a Location Update dialogue with any mobile phone answering to the LAC broadcast, obtaining from each answering mobile phone its IMSI number;
   - sending a Location Updating Reject message to each mobile phone whose IMSI number has been obtained;
   - counting the different IMSI numbers received;
   - sending said counting to a processing unit;
- a processing unit comprising calculating means configured for calculating an estimated number of people in each coverage area using additional information (for instance stored in a database).

In an illustrative example, each local unit can be configured for broadcasting the same LAC continuously. According to an embodiment of the invention, each local unit can be configured for broadcasting different LACs each time. Or, according to an illustrative example, each local unit can be configured for changing between broadcasting the same LAC continuously or broadcasting different LACs each time, according to the type of counting carried out (continuous mode or pulse mode).

Each local unit comprises preferably means for configuring at least one of the following parameters that determines its corresponding coverage area:
- the transmission power to modify the reach;
- the radiation pattern of the antenna system to modify the shape of the coverage area.

In a preferred embodiment, in which the processing unit is remote to the at least one local unit, the processing unit comprises management means configured for remotely managing the at least one local unit.

The processing unit can comprise interface means through which third parties externally retrieve the calculation of the estimated number of people in each coverage area.

Unlike the prior art discussed above, the claimed method and system are thus simultaneously automated and accurate. Both system and method make use of standard cellular mechanisms to count the number of functioning mobile phones in an area, irrespective of the mobile network to which they are connected. The inventive system may be considered as a "box" that captures mobile phone identities and counts their number.

In many cases, it is a fair assumption that nearly everybody carries at least one mobile phone or other cellular enabled device - as a result simply counting these devices provides an accurate estimate of the number of people. Where this assumption does not hold, the count may be treated as a representative sample, the true number of people present being estimated as the counted number divided by the percentage of people known to carry a mobile phone in the local population.

As noted previously, there are prior art disclosures of handset counting methods (see US2003010822): these require dedicated handsets. The inventive method, by contrast, makes use of standard mobile phones. Therefore, while it may be known to count people or assets using technologies, such as Bluetooth, the same mechanisms would not work with every standard mobile phone.

Other prior art (US2002183069) uses the functionalities of conventional base stations to count accessible mobile phones. The inventive solution describes a dedicated counting device that need not be associated with any one (or just one) network operator. Making a similar count using the prior art base station method would require access to each of the base stations of the respective network operators and (as these base stations would generally serve different coverage areas) even then the count would not be as accurate as with the inventive solution. Furthermore, the use of a local "box", compared to the cellular base stations, enables not only much smaller counting areas but also tuning and shaping that area according to every particular case.

A further advantage of the present invention is that the method applies to all handsets functioning on a given radio access technology.

In prior art solutions such as EP1779133, standard mobile phones with active calls are counted by using special sensing boxes that are passive radio probes. These solutions only work for a subset of devices, since they only count devices having **active** communications (such as voice calls, SMS or Internet browsing) to determine the number of people in a specific location.

The inventive method counts people who are carrying a functioning mobile phone, but it is not necessary for the method to work that these subscribers are having an active communication in their mobile phones (making a call or sending SMS): nor is it necessary that the subscribers be subscribers to the same network operator. This is achieved by using special sensing boxes that are not base stations of any particular mobile network and are not passive radio probes either.

In summary then, in an illustrative example the method comprises broadcasting a location identifier (LAC) different from any other LAC of the radio cells of the mobile network in the surroundings from at least one local unit (1,1',1"), within a coverage area (4,4',4"); establishing a Location Update dialogue with any mobile phone (3,3',3") answering to the LAC broadcast; obtaining from each answering mobile phone (3,3',3") its IMSI number; sending a Location Updating Reject message to each mobile phone (3,3',3") whose IMSI number has been obtained; counting the different IMSI numbers received; and calculating an estimated number of people in the coverage area (4,4',4") on the basis of this count and, optionally, the known prevalence of mobile telephone devices per person.

### Brief description of the drawings

To complete the description and, in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:

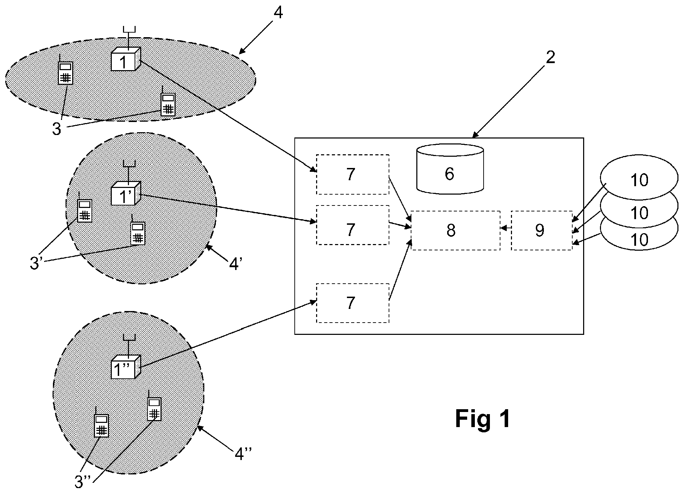

Figure 1 shows a basic diagram of the system object of invention.

### Detailed description of the preferred embodiments

The system, represented schematically in **Figure 1**, is composed of at least one local unit (1,1',1") and a processing unit 2, local or remote to the previous one.

The local unit (1,1',1") has the following functions:
- An identity capture function that uses standard cellular mechanisms (similar to the ones in existing BTS and BSC/RNC). It broadcasts system information with a certain LAC (Location Area Code), forcing the mobile phones (3,3',3") of the same network within its reach area, the coverage area (4,4',4"), to send a Location Update message. It captures then the identity (e.g. IMSI) of those phones (3,3',3") and sends back a Location Update reject message to avoid further disturbing the phones (during a certain period chosen by the operator or until they are switched off). The radiation pattern of the antenna system can be modified to shape the coverage area (4,4',4") convenient to the particular use case.

This identity capture function can have two modes of operation:
(a) continuous, where it is operating (i.e. transmitting, receiving and capturing) all the time, or
(b) pulse, where it is generally deactivated and it is activated only for short periods of time in order to capture identities during it.

In an embodiment of the invention, the LAC broadcasted by the node is replaced by another one in order to force again all handsets to send a Location Update message - this can be done in both modes of operation, although it fits especially the pulse mode.
- A counting function, which in coordination with the previous function, counts the accumulated number of different identities that have performed a Location Update process. After a change of LAC, depending on the particular use case, this function can discard the same identities captured before or on the contrary consider them as different for counting purposes (e.g. how many people are in a train carriage at 8:00, at 9:00, at 10:00, etc.). Then, the counting function converts cellular identities (IMSI) into numbers. It can be as simple as a mere counter, although it can include intelligence for detecting the duplication of identities (e.g. a user switches off and on his phone) and not counting it twice. It should work in coordination with the mode of operation (continuous or pulse) of the previous function.

On the other hand, the processing unit 2 has the following functions:
- A calculating function, carried out through calculating means 7, which receives the data from the counting function and calculates the number of people in the area, based on additional information in a database. This additional information can be, for instance, (a) the percentage of switched-on mobile phones versus people in that country, region, city or neighbourhood; (b) in case of a single-operator system, the market share of the selected mobile operator in that country, region, city or neighbourhood.
- Optionally, a concentrator function, carried out through management means 8, that manages the flows of information coming from the different locations. Every flow would be composed of the identity capture function (with includes a local unit for radio transmissions), the counting function and the calculating function. There could be many flows running in parallel, corresponding to multiple locations or sources (e.g. train stations, museums, streets). Besides, the concentrator would perform the remote management of local units (e.g. changing LAC value, adjusting transmission power). The alternative for not having this concentrator would be operating the previous functions in a standalone mode and then using the results off-line. For instance, storing the figures of museum visitors in a hard drive during a day and then loading them in a PC for their analysis by the museum's owners.
- Optionally, a gateway function, carried out through interface means 9, which provides the interface to third parties 10 that are going to use that information, enable the management of campaigns for counting people, etc. It should work together with the concentrator, e.g. to be able to order actions on the local units according to the requirements of the campaigns.

The function for capturing cellular identities (identity capture function) must always include a unit local to the venue (e.g. train carriage, train station, street) for radio transmissions and besides may have part of its functionality located remotely in the network. This function replicates a standard cellular mechanism for the dialogue with mobile phones within its reach. In particular, this local unit broadcasts specific system information as if it was a BTS (base station) and forces a Location Update message by all mobile phones within its reach belonging to its cellular network. Then, the function captures the identity of those phones, such as the IMSI, and rejects the Location Update attempts, hence not disturbing the mobile phones further. This behaviour is based on well-known standard cellular procedures for GSM and UMTS and the local unit 1 can be built based on existing picocell technology with a very low cost (e.g. below 200 euros). Location Update procedures are described in detail in ETSI 123 909 V4.0.0 (2001-03), a technical report from the European Telecommunications Standards Institute and 3GPP TS 23.012, from the 3rd Generation Partnership Project.

Additional details of this identity capture function are described here:
- The function (composed of the local unit plus optionally some intelligence in network systems) implements a small subset of the functionality of a BTS, BSC/RNC and MSC, in particular the one described below.
- The local unit 1 transmits and receives in the licensed spectrum of a mobile network operator. This local unit 1 broadcasts system information in the radio interface towards the mobile phones using the standard procedures and channels for that purpose. As part of its Cell Global Identity, this unit broadcasts a LAC (Location Area Code) that is different from any LAC of the real cells of the mobile network in the surroundings (e.g. the operator can book special Location Area Codes for the road usage charging service).
- Due to the standard behaviour in any mobile phone, when a phone detects this Location Area Code because it enters under coverage of the unit, the mobile phone will initiate a Location Update dialogue with the unit.
- The function (local unit and/or network systems) will respond to that dialogue and, again following standard procedures, will force the phone to provide its IMSI number (note that even if the phone answers first with the TIMSI number, which is a temporal identity, the function can still request the phone to provide the IMSI number).
- Once obtained the IMSI number, the function will finish the dialogue sending a Location Updating Reject message to the phone with a rejection cause that will make the phone not trying again a Location Update dialogue with the function during a known timer (e.g. 2 hours) or as long as the phone keeps switched on (e.g. the latter is feasible in GSM with the rejection cause is "Roaming not allowed in this location area"). This means that the mobile phone will ignore the radio transmissions of the local unit from this moment on and will not try to connect with it even it is still under the coverage of the unit, unless the period expires or the phone is switched off and switched on again within that coverage.

The coverage area (4,4',4") of the local unit (1,1',1") can be configured based on two aspects: first, the transmission power, which determines the reach; second, the features of the antenna system (e.g. radiation pattern, gain, downtilt), which determine the shape of the coverage. Both aspects can be statically or dynamically modified to shape a particular area that is convenient to the counting scenario, e.g. a set of train carriages.

The operating parameters of the unit (e.g. Location Area Code, transmitting power, antenna system) could be configured locally or remotely via a typical remote Operation & Maintenance system (e.g. based on IP protocols).

As mentioned before, this function for capturing identities could be entirely local (i.e. all the procedure replicating BTS, BSC/RNC and MSC can be managed by the local unit, acting standalone) or can be a combination of local unit plus network equipment (some parts or the procedure done locally and others remotely). In any case, a local unit is always required for radio transmissions.

The features explained above enable interesting functions for the counting scenario. For instance, the function could work either in continuous mode or in pulse mode. The first one means that the LAC is maintained fixed and hence the function is continuously capturing the identities of the new mobile users that enters the area of coverage (e.g. accumulated visits of a museum during a day). The second one can be obtained by a change of LAC in the function, which will force again all the mobile phones around (old and new) to register again and hence be captured (e.g. snapshot of the number of visitors in a museum at 9:00, at 10:00, at 11:00, etc.).

The local unit can be fixed (e.g. installed in a train station) or mobile (e.g. installed in a train carriage or in a helicopter).

In case of a multi-operator scenario, some parts of the unit should be duplicated per operator whereas others can be shared (e.g. antenna system).

In terms of physical equipment, in a typical installation there would be local units located at the areas where people has to be counted and one or several network servers performing one of several functions (typically gateway and concentrator, but also can do calculating, counting and part of the identity capture). Figure 1 offers an illustrative view of how functions could be distributed in an architecture with gateway and concentrator.

## Claims

1. Method for automatically counting the number of people in an area, said people carrying a switched-on mobile phone, the method comprising the steps of:
broadcasting a Location Area Code, LAC, over a coverage area (4, 4', 4"), in the licensed spectrum of at least one mobile network operator and from at least one local unit (1, 1', 1"), each of said local units (1, 1', 1") being located at an area where people are to be counted, said broadcast LAC being different from any LAC of the radio cells of the mobile network in the surroundings;
establishing at each local unit (1, 1', 1") a Location Update dialogue with any mobile phone (3, 3', 3") answering to the LAC broadcast, obtaining from each answering mobile phone (3, 3', 3") its International Mobile Subscriber Identity, IMSI, number;
sending from each local unit (1, 1', 1") a Locating Updating Reject message to each mobile phone (3, 3', 3") whose IMSI number has been obtained;
counting the different IMSI numbers received; and
calculating an estimated number of people in the coverage area (4, 4', 4") using the count of the different IMSI numbers received and additional information;
further comprising replacing the LAC with another LAC at the local unit, and repeating the broadcasting, establishing, sending, counting and calculating steps.

2. Method for automatically counting the number of people in an area according to claim 1, wherein the broadcasting is activated and deactivated for short periods of time in a pulsed mode.

3. Method for automatically counting the number of people in an area according to claim 2, wherein the LAC is replaced with another LAC for each pulse.

4. Method for automatically counting the number of people in an area according to claim 1, wherein the broadcasting is continuous.

5. Method for automatically counting the number of people in an area according to claims 1 to 4, **characterised in that** it additionally comprises, for the count carried out in the step of counting the different IMSI numbers received, discarding the duplicated IMSI numbers received during a predetermined period of time before.

6. Method for automatically counting the number of people in an area according to any previous claim, **characterised in that** the coverage area (4, 4', 4") of the at least one local unit (1, 1', 1") is configurable through at least one of the following parameters:
the transmission power to modify the reach;
the radiation pattern of the antenna system to modify the shape of the coverage area (4).

7. Method for automatically counting the number of people in an area according to any previous claim, in which there is a plurality of local units (1, 1', 1"), **characterised in that** it comprises receiving at a processing unit (2) counts of the different IMSI numbers for each coverage area (4, 4', 4") from the different local units (1, 1', 1"), the calculation of the estimated number of people in each corresponding coverage area (4, 4', 4") being carried out in said processing unit (2) with access to the additional information.

8. Method for automatically counting the number of people in an area according to any previous claim, **characterised in that** the additional information comprises at least one of the following:
the percentage of switched-on mobile phones versus people in the country, region, city or neighbourhood where the corresponding local unit (1, 1', 1") is located;
the market share of the selected mobile network operator in the country, region, city or neighbourhood where the corresponding local unit (1, 1', 1") is located.

9. System for automatically counting the number of people in an area, said people carrying a switched-on mobile phone, comprising:
at least one local unit (1, 1', 1") provided with cellular radio transceiver means for transmitting and receiving signals in the licensed spectrum of at least one mobile network operator, each local unit (1, 1', 1") being located at the area where people are to be counted, and being configured to:
broadcast over a coverage area (4, 4', 4") a Location Area Code, LAC, different from any LAC of the radio cells of the mobile network in the surroundings;
establish a Location Update dialogue with any mobile phone (3, 3', 3") answering to the LAC broadcast, obtaining from each answering mobile phone (3, 3', 3") its International Mobile Subscriber Identity, IMSI, number;
send a Locating Updating Reject message to each mobile phone (3, 3', 3") whose IMSI number has been obtained;
count the different IMSI numbers received;
send said counting information to a processing unit (2);
replace the LAC with another LAC and repeat the actions of broadcasting, establishing, sending a Locating Updating Reject message, counting and sending said counting information;
the processing unit (2) comprising calculating means (7), wherein for each LAC broadcast, the counting means (7) is configured to calculate an estimated number of people in the coverage area (4, 4', 4") using the count of the different IMSI numbers received in response to the broadcast of said LAC and additional information.

10. The system for automatically counting the number of people in an area according to claim 9, the local unit further configured to activate and deactivate broadcast for short periods of time.

11. The system for automatically counting the number of people in an area according to claim 10, the local unit further configured to replace the LAC with another LAC each time broadcast of the LAC is activated.

12. The system for automatically counting the number of people in an area according to claim 9, the local unit configured to continuously broadcast.

13. System for automatically counting the number of people in an area according to any of claims 9 to 12, **characterised in that** the at least one local unit (1, 1', 1") is additionally configured for, when counting the different IMSI numbers received, discarding the duplicated IMSI numbers received during a predetermined period of time before.

14. System for automatically counting the number of people in an area according to any of claims 9 to 13, **characterised in that** the at least one local unit (1, 1', 1") comprises means for configuring at least one of the following parameters that determines its corresponding coverage area (4, 4', 4"):
the transmission power to modify the reach;
the radiation pattern of the antenna system to modify the shape of the coverage area (4).

15. System for automatically counting the number of people in an area according to any of claims 9 to 14, in which the processing unit (2) is remote to the at least one local unit (1, 1', 1"), **characterised in that** the processing unit (2) comprises management means (8) configured for remotely managing the at least one local unit (1, 1', 1").

16. System for automatically counting the number of people in an area according to any of claims 9 to 15, **characterised in that** the processing unit (2) comprises interface means (9) through which third parties (10) externally retrieve the calculation of the estimated number of people in each coverage area (4, 4', 4").

## Patentansprüche

1. Verfahren zum automatischen Zählen der Anzahl an Menschen in einem Gebiet, wobei die genannten Menschen ein eingeschaltetes Mobiltelefon bei sich tragen, wobei das Verfahren die folgenden Schritte umfasst:
Übertragen eines Standortbereichscodes (Location Area Code, LAC) über ein Versorgungsgebiet (4, 4', 4") in dem lizenzierten Spektrum mindestens eines Mobilnetzbetreibers und von mindestens einer lokalen Einheit (1, 1', 1"), wobei sich jede der genannten lokalen Einheiten (1, 1', 1") in einem Gebiet befindet, in dem Menschen zu zählen sind, wobei sich der genannte übertragene LAC von jedem LAC der Funkzellen des Mobilnetzes in der Umgebung unterscheidet;
Einrichten, an jeder lokalen Einheit (1, 1', 1"), eines Standortaktualisierungsdialogs mit einem beliebigen Mobiltelefon (3, 3', 3"), das die LAC-Übertragung beantwortet, wobei die internationale Mobilfunk-Teilnehmerkennungsnummer (International Mobile Subscriber Identity, IMSI-Nummer) von jedem antwortenden Mobiltelefon (3, 3', 3") eingeholt wird;
Senden, von jeder lokalen Einheit (1, 1', 1"), einer Nachricht über die Ablehnung der Standortaktualisierung an jedes Mobiltelefon (3, 3', 3"), dessen IMSI-Nummer eingeholt wurde;
Zählen der unterschiedlichen empfangenen IMSI-Nummern; und
Berechnen einer geschätzten Anzahl an Menschen in dem Versorgungsgebiet (4, 4', 4") unter Verwendung der Zählung der unterschiedlichen empfangenen IMSI-Nummern und zusätzlicher Informationen;
weiter umfassend das Ersetzen des LAC durch einen anderen LAC an der lokalen Einheit, und Wiederholen der Übertragungs-, Einrichtungs-, Sende-, Zähl- und Berechnungsschritte.

2. Verfahren zum automatischen Zählen der Anzahl an Menschen in einem Gebiet nach Anspruch 1, wobei die Übertragung für kurze Zeiträume in einem pulsierten Modus aktiviert und deaktiviert wird.

3. Verfahren zum automatischen Zählen der Anzahl an Menschen in einem Gebiet nach Anspruch 2, wobei der LAC bei jedem Puls durch einen anderen LAC ersetzt wird.

4. Verfahren zum automatischen Zählen der Anzahl an Menschen in einem Gebiet nach Anspruch 1, wobei die Übertragung kontinuierlich erfolgt.

5. Verfahren zum automatischen Zählen der Anzahl an Menschen in einem Gebiet nach Anspruch 1 bis 4, **dadurch gekennzeichnet, dass** es für die in dem Schritt der Zählung der unterschiedlichen empfangenen IMSI-Nummern durchgeführte Zählung weiter umfasst, dass doppelte, während eines vorherigen zuvor bestimmten Zeitraums empfangene IMSI-Nummern verworfen werden.

6. Verfahren zum automatischen Zählen der Anzahl an Menschen in einem Gebiet nach einem der vorhergehenden Ansprüche, **dadurch gekennzeichnet, dass** das Versorgungsgebiet (4, 4', 4") der mindestens einen lokalen Einheit (1, 1', 1") mittels mindestens einem der folgenden Parameter konfigurierbar ist:
der Sendeleistung zur Änderung der Reichweite;
dem Strahlungsmuster des Antennensystems zur Änderung der Form des Versorgungsgebiets (4).

7. Verfahren zum automatischen Zählen der Anzahl an Menschen in einem Gebiet nach einem der vorhergehenden Ansprüche, in dem eine Vielzahl lokaler Einheiten (1, 1', 1") vorhanden ist, **dadurch gekennzeichnet, dass** es umfasst, dass die Zählung der unterschiedlichen IMSI-Nummern für jedes Versorgungsgebiet (4, 4', 4") von den unterschiedlichen lokalen Einheiten (1, 1', 1") an einer Verarbeitungseinheit (2) empfangen wird, wobei die Berechnung der geschätzten Anzahl an Menschen in jedem entsprechenden Versorgungsgebiet (4, 4', 4") in der genannten Verarbeitungseinheit (2) mit Zugang zu den zusätzlichen Informationen durchgeführt wird.

8. Verfahren zum automatischen Zählen der Anzahl an Menschen in einem Gebiet nach einem der vorhergehenden Ansprüche, **dadurch gekennzeichnet, dass** die zusätzlichen Informationen mindestens einen der folgenden umfassen:
den Prozentsatz eingeschalteter Mobiltelefone im Vergleich zu Menschen in dem Land, der Region, Stadt oder Nachbarschaft, in der sich die entsprechende lokale Einheit (1, 1', 1") befindet;
den Marktanteil des ausgewählten Mobilnetzbetreibers in dem Land, der Region, Stadt oder Nachbarschaft, in der sich die entsprechende lokale Einheit (1, 1', 1") befindet.

9. System zum automatischen Zählen der Anzahl an Menschen in einem Gebiet, wobei die genannten Menschen ein eingeschaltetes Mobiltelefon bei sich tragen, umfassend:
mindestens eine lokale Einheit (1, 1', 1"), die mit einer zellularen Funk-Sende-/Empfangseinrichtung für die Übertragung und den Empfang von Signalen in dem lizenzierten Spektrum mindestens eines Mobilnetzbetreibers versehen ist, wobei sich jede lokale Einheit (1, 1', 1") in dem Gebiet befindet, in dem Menschen zu zählen sind, und wobei sie für Folgendes eingerichtet ist:
Übertragen, über ein Versorgungsgebiet (4, 4', 4"), eines Standortbereichscodes (Location Area Code, LAC), der sich von jedem LAC der Funkzellen des Mobilnetzes in der Umgebung unterscheidet;
Einrichten eines Standortaktualisierungsdialogs mit einem beliebigen Mobiltelefon (3, 3', 3"), das die LAC-Übertragung beantwortet, wobei die internationale Mobilfunk-Teilnehmerkennungsnummer (International Mobile Subscriber Identity, IMSI-Nummer) von jedem antwortenden Mobiltelefon (3, 3', 3") eingeholt wird;
Senden einer Nachricht über die Ablehnung der Standortaktualisierung an jedes Mobiltelefon (3, 3', 3"), dessen IMSI-Nummer eingeholt wurde;
Zählen der unterschiedlichen empfangenen IMSI-Nummern;
Senden der genannten Zählinformationen an eine Verarbeitungseinheit (2);
Ersetzen des LAC durch einen anderen LAC und Wiederholen der Schritte der Übertragung, Einrichtung, Sendung einer Nachricht über die Ablehnung der Standortaktualisierung, Zählung und Sendung der genannten Zählinformationen;
wobei die Verarbeitungseinheit (2) eine Berechnungseinrichtung (7) umfasst, wobei die Berechnungseinrichtung (7) eingerichtet ist, um unter Verwendung der Zählung der unterschiedlichen, infolge der Übertragung des genannten LAC und der zusätzlichen Informationen empfangenen IMSI-Nummern für jede LAC-Übertragung eine geschätzte Anzahl an Menschen in dem Versorgungsgebiet (4, 4', 4") zu berechnen.

10. Das System zum automatischen Zählen der Anzahl an Menschen in einem Gebiet nach Anspruch 9, wobei die lokale Einheit weiter eingerichtet ist, um die Übertragung für kurze Zeiträume zu aktivieren und zu deaktivieren.

11. Das System zum automatischen Zählen der Anzahl an Menschen in einem Gebiet nach Anspruch 10, wobei die lokale Einheit weiter eingerichtet ist, um den LAC bei jeder Aktivierung der Übertragung des LAC durch einen anderen LAC zu ersetzen.

12. Das System zum automatischen Zählen der Anzahl an Menschen in einem Gebiet nach Anspruch 9, wobei die lokale Einheit zur kontinuierlichen Übertragung eingerichtet ist.

13. System zum automatischen Zählen der Anzahl an Menschen in einem Gebiet nach Anspruch 9 bis 12, **dadurch gekennzeichnet, dass** die mindestens eine lokale Einheit (1, 1', 1") weiter eingerichtet ist, um bei der Zählung der unterschiedlichen empfangenen IMSI-Nummern doppelte, während eines vorherigen zuvor bestimmten Zeitraums empfangene IMSI-Nummern zu verwerfen.

14. System zum automatischen Zählen der Anzahl an Menschen in einem Gebiet nach einem der Ansprüche 9 bis 13, **dadurch gekennzeichnet, dass** die mindestens eine lokale Einheit (1, 1', 1") eine Einrichtung zur Konfigurierung von mindestens einem der folgenden Parameter umfasst, das ihr entsprechendes Versorgungsgebiet bestimmt (4, 4', 4"):
die Sendeleistung zur Änderung der Reichweite;
das Strahlungsmuster des Antennensystems zur Änderung der Form des Versorgungsgebiets (4).

15. System zum automatischen Zählen der Anzahl an Menschen in einem Gebiet nach einem der Ansprüche 9 bis 14, in dem sich die Verarbeitungseinheit (2) entfernt von der mindestens einen lokalen Einheit (1, 1', 1") befindet, **dadurch gekennzeichnet, dass** die Verarbeitungseinheit (2) eine Verwaltungseinrichtung (8) umfasst, die zur Fernverwaltung der mindestens einen lokalen Einheit (1, 1', 1") eingerichtet ist.

16. System zum automatischen Zählen der Anzahl an Menschen in einem Gebiet nach einem der Ansprüche 9 bis 15, **dadurch gekennzeichnet, dass** die Verarbeitungseinheit (2) eine Schnittstelleneinrichtung (9) umfasst, über die Drittparteien (10) die Berechnung der geschätzten Anzahl an Menschen in jedem Versorgungsgebiet (4, 4', 4") extern abrufen.

## Revendications

1. Un procédé de décompte automatique du nombre de personnes dans une zone, lesdites personnes transportant un téléphone mobile allumé, le procédé comprenant les opérations suivantes :
la radiodiffusion d'un code de zone de localisation, LAC, sur une zone de couverture (4, 4', 4") dans le spectre sous licence d'au moins un opérateur de réseau mobile et à partir d'au moins une unité locale (1, 1', 1"), chacune desdites unités locales (1, 1', 1") étant située au niveau d'une zone dans laquelle des personnes doivent être décomptées, ledit LAC radiodiffusé étant différent de tout LAC des cellules radio du réseau mobile dans les alentours,
l'établissement au niveau de chaque unité locale (1, 1', 1") d'un dialogue d'actualisation de localisation avec tout téléphone mobile (3, 3', 3") répondant à la radiodiffusion de LAC, l'obtention à partir de chaque téléphone mobile répondant (3, 3', 3") de son numéro d'identité d'abonné mobile internationale, IMSI,
l'envoi à partir de chaque unité locale (1, 1', 1") d'un message de rejet d'actualisation de localisation à chaque téléphone mobile (3, 3', 3") dont le numéro IMSI a été obtenu,
le décompte des différents numéros IMSI reçus, et
le calcul d'un nombre estimé de personnes dans la zone de couverture (4, 4', 4") au moyen du décompte des différents numéros IMSI reçus et d'informations additionnelles,
comprenant en outre le remplacement du LAC par un autre LAC au niveau de l'unité locale, et la répétition des opérations de radiodiffusion, d'établissement, d'envoi, de décompte et de calcul.

2. Le procédé de décompte automatique du nombre de personnes dans une zone selon la Revendication 1, où la radiodiffusion est activée et désactivée pendant de courtes périodes temporelles dans un mode pulsé.

3. Le procédé de décompte automatique du nombre de personnes dans une zone selon la Revendication 2, où le LAC est remplacé par un autre LAC pour chaque impulsion.

4. Le procédé de décompte automatique du nombre de personnes dans une zone selon la Revendication 1, où la radiodiffusion est permanente.

5. Le procédé de décompte automatique du nombre de personnes dans une zone selon les Revendications 1 à 4, **caractérisé en ce qu'**il comprend en outre, pour le décompte effectué à l'opération de décompte des différents numéros IMSI reçus, le rejet des numéros IMSI dupliqués reçus au cours d'une période de temps prédéterminée antérieure.

6. Le procédé de décompte automatique du nombre de personnes dans une zone selon l'une quelconque des Revendications précédentes, **caractérisé en ce que** la zone de couverture (4, 4', 4") de la au moins une unité locale (1, 1', 1") est configurable par l'intermédiaire d'au moins un des paramètres suivants : la puissance de transmission destinée à une modification de la portée, le diagramme de rayonnement du système d'antennes destiné à une modification de la forme de la zone de couverture (4).

7. Le procédé de décompte automatique du nombre de personnes dans une zone selon l'une quelconque des Revendications précédentes, dans lequel il existe une pluralité d'unités locales (1, 1', 1"), **caractérisé en ce qu'**il comprend la réception au niveau d'une unité de traitement (2) de décomptes des différents numéros IMSI pour chaque zone de couverture (4, 4', 4") à partir des différentes unités locales (1, 1', 1"), le calcul du nombre estimé de personnes dans chaque zone de couverture correspondante (4, 4', 4") étant effectué dans ladite unité de traitement (2) avec un accès aux informations additionnelles.

8. Le procédé de décompte automatique du nombre de personnes dans une zone selon l'une quelconque des Revendications précédentes, **caractérisé en ce que** les informations additionnelles comprennent au moins un des éléments suivants :
le pourcentage de téléphones mobiles allumés par rapport aux personnes dans le pays, la région, la ville ou le voisinage dans lequel l'unité locale correspondante (1, 1', 1") se situe,
la part de marché de l'opérateur de réseau mobile sélectionné dans le pays, la région, la ville ou le voisinage dans lequel l'unité locale correspondante (1, 1', 1") se situe.

9. Un système de décompte automatique du nombre de personnes dans une zone, lesdites personnes transportant un téléphone mobile allumé, comprenant :
au moins une unité locale (1, 1', 1") équipée d'un moyen d'émetteur-récepteur radio cellulaire destiné à l'émission et à la réception de signaux dans le spectre sous licence d'au moins un opérateur de réseau mobile, chaque unité locale (1, 1', 1") étant située au niveau de la zone dans laquelle des personnes doivent être décomptées, et étant configurée de façon à :
radiodiffuser sur une zone de couverture (4, 4', 4") un code de zone de localisation, LAC, différent de tout LAC des cellules radio du réseau mobile dans les alentours,
établir un dialogue d'actualisation de localisation avec tout téléphone mobile (3, 3', 3") répondant à la radiodiffusion de LAC, obtenir à partir de chaque téléphone mobile répondant (3, 3', 3") son numéro d'identité d'abonné mobile internationale, IMSI,
envoyer un message de rejet d'actualisation de localisation à chaque téléphone mobile (3, 3', 3") dont le numéro IMSI a été obtenu,
décompter les différents numéros IMSI reçus,
envoyer lesdites informations de décompte à une unité de traitement (2),
remplacer le LAC par un autre LAC et répéter les actions de radiodiffusion, d'établissement, d'envoi d'un message de rejet d'actualisation de localisation, de décompte et d'envoi desdites informations de décompte,
l'unité de traitement (2) comprenant un moyen de calcul (7), où, pour chaque radiodiffusion de LAC, le moyen de calcul (7) est configuré de façon à calculer un nombre estimé de personnes dans la zone de couverture (4, 4', 4") au moyen du décompte des différents numéros IMSI reçus en réponse à la radiodiffusion dudit LAC et d'informations additionnelles.

10. Le système de décompte automatique du nombre de personnes dans une zone selon la Revendication 9, l'unité locale étant configurée en outre de façon à activer et désactiver une radiodiffusion pendant de courtes périodes temporelles.

11. Le système de décompte automatique du nombre de personnes dans une zone selon la Revendication 10, l'unité locale étant configurée en outre de façon à remplacer le LAC par un autre LAC chaque fois qu'une radiodiffusion du LAC est activée.

12. Le système de décompte automatique du nombre de personnes dans une zone selon la Revendication 9, l'unité locale étant configurée de façon à radiodiffuser en continu.

13. Le système de décompte automatique du nombre de personnes dans une zone selon l'une quelconque des Revendications 9 à 12, **caractérisé en ce que** la au moins une unité locale (1, 1', 1") est configurée en outre de façon à, lors du décompte des différents numéros IMSI reçus, rejeter les numéros IMSI dupliqués reçus au cours d'une période de temps prédéterminée antérieure.

14. Le système de décompte automatique du nombre de personnes dans une zone selon l'une quelconque des Revendications 9 à 13, **caractérisé en ce que** la au moins une unité locale (1, 1', 1") comprend un moyen de configuration d'au moins un des paramètres suivants qui détermine sa zone de couverture correspondante (4, 4', 4") : la puissance de transmission destinée à une modification de la portée, le diagramme de rayonnement du système d'antennes destiné à une modification de la forme de la zone de couverture (4).

15. Le système de décompte automatique du nombre de personnes dans une zone selon l'une quelconque des Revendications 9 à 14, dans lequel l'unité de traitement (2) est à distance de la au moins une unité locale (1, 1', 1"), **caractérisé en ce que** l'unité de traitement (2) comprend un moyen de gestion (8) configuré de façon à gérer à distance la au moins une unité locale (1, 1', 1").

16. Le système de décompte automatique du nombre de personnes dans une zone selon l'une quelconque des Revendications 9 à 15, **caractérisé en ce que** l'unité de traitement (2) comprend un moyen d'interface (9) par l'intermédiaire duquel des parties tierces (10) récupèrent de manière externe le calcul du nombre estimé de personnes dans chaque zone de couverture (4, 4', 4").
